# EUROPEAN PATENT APPLICATION

(11) **EP 2 434 168 A2**
(43) Date of publication of application: **28.03.2012**
(21) Application number: 11182719.2
(22) Date of filing: 26.09.2011
(51) Int. Cl.: F16B 13/08, F16B 5/06, F16B 5/12, F16B 13/04, F16B 13/06

(54) **Fixing device**

(30) Priority: 24.09.2010 IT RC20100008
(71) Applicant: Rotilio, Antonino, 89129 Reggio Calabria (RC) (IT)
(72) Inventor: Rotilio, Antonino, 89129 Reggio Calabria (RC) (IT)
(74) Representative: Romano, Giuseppe

(57) **Abstract**

The present invention refers to a mechanical device (51) for the joining of two or more parts (2,3) side by side therebetween. In particular, the device according to the present invention allows to fix and tighten two or more components of solid nature and perfectly join them in a non-removable manner and without use of other accessories or tools providing its fixing and/or final tightening steps.

## Description

The present invention refers to a mechanical device for the joining of two or more parts side by side therebetween.

In particular, the device according to the present invention allows to fix and tighten two or more components of solid nature and to perfectly join them in a non-removable manner and without use of other accessories or tools providing its fixing and/or final tightening steps.

### State of the Art

It is well-known that in order to rigidly join two components it is necessary to apply fixing methods envisaging the use of screws, bolts or the like.

Even in case an item has to be fixed to wall, anchors (or dowels), e.g. of screw type, have to be used, all however based on the tightening effect of a screw-like component.

Therefore, in order to effect any one type of rigid fixing between two or more components, besides the drill which is for drilling the components themselves, various tools still have to be used for tightening the anchor and/or the screws or bolts placed for fixing the components themselves.

Moreover, several of the known fixing systems suffer from temperature variations, vibrations and/or knocks that may occur, and which lead to a loosening of the fixing system with subsequent unintentional removal and detachment of the parts, with imaginable and consequent damages.

### Object of the Invention

An object of the present invention is to provide a device that can be used to fix two or more parts in a substantially non-removable manner, with no need to use any tool.

Therefore, object of the present invention is to provide an innovative solution to the problems still left open by the known art, by providing a device as defined in independent claim 1.

Secondary features of the present invention are instead defined in the corresponding dependent claims thereof.

As will be illustrated hereinafter in the description, the present invention entails several advantages.

In particular, beside the benefit of not using any tool for the final fixing, apart from a common drilling system for its insertion, a further advantage lies in that the two portions, once fixed, cannot undergo loosening over time, the bond being such as to withstand thermal expansion caused by temperature of the site of use.

Further advantages, as well as the features and operation steps of the present invention, will be made apparent in the following detailed description of embodiments thereof, given by way of example and not for limitative purposes. Reference will be made to the figures of the annexed drawings, wherein:
- Figure 1 is a longitudinal sectional view of a first embodiment of a device according to the present invention;
- Figures 2A and 2B are sectional views of a detail of the device of Figure 1, in use;
- Figure 3 is an exploded view of the device of Figure 1, in use;
- Figure 4 is a longitudinal sectional view of the device of Figure 1, in an installed condition;
- Figure 5 is a partial perspective view of a second embodiment of a device according to the present invention;
- Figure 6 is a longitudinal sectional view of a device according to such second embodiment;
- Figures 7A and 7B are sectional views of a detail of the device of Figure 6, in use;
- Figure 8 is an exploded view of the device of Figure 6, in use;
- Figure 9 is a longitudinal sectional view of the device of Figure 6 in an installed condition; and
- Figures 10, 11 and 12 are views of a third embodiment of a device according to the present invention.

### Detailed Description of the Invention

The present invention will be detailed hereinafter, making reference to the above-indicated figures.

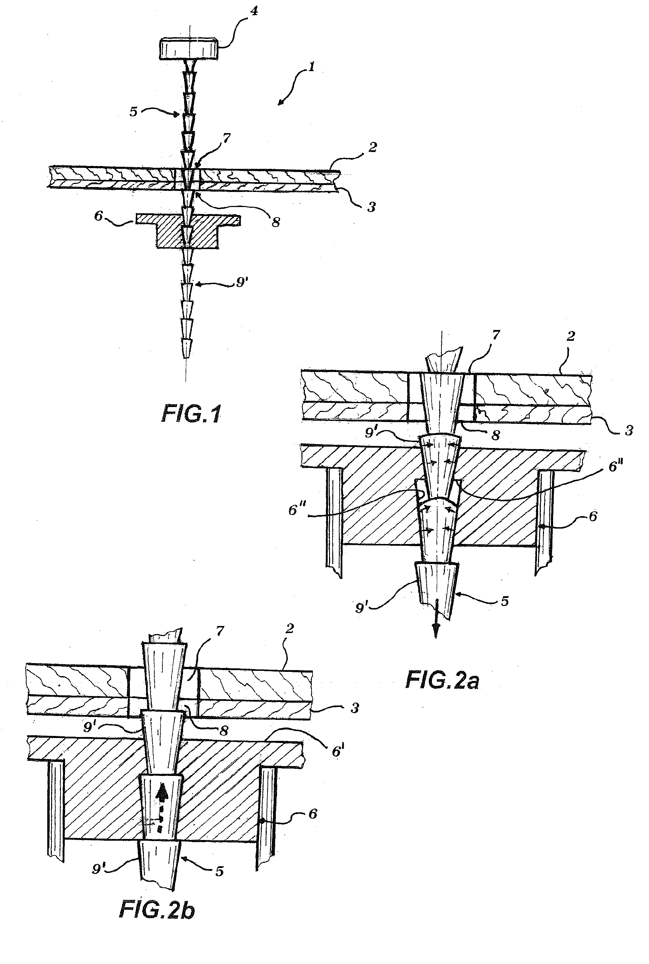

Referring initially to Figure 1, it shows a first embodiment of a device 1 according to the present invention.

The device 1, as widely illustrated hereto, can be used to carry out the joining of two or more parts 2, 3 to be joined, side-by-side therebetween. By way of example, such parts 2, 3 are depicted as plane elements, e.g. two boards or the like. Of course, it has to be understood that the embodiment depicted herein should not be construed as limitative. In fact, the parts to be joined could be of any shape, as long as it allows the applying of the device. Moreover, the parts to be joined could of course be more than two and side-by-side therebetween even not directly, therefore without direct contact therebetween, but by means of intermediate members.

The device 1 comprises first of all an abutment element 4. As will be evident hereinafter in the description, the abutment member 4 directly concurs to the tightening of the two parts.

A first end of a tie member 5 is fixed to the abutment member 4. A second opposite end of the tie member is instead a free end.

According to the present invention, the device 1 further comprises a plate member 6.

The cooperation of said members therebetween is such that the plate member 6 may slide only unidirectionally along the tie member 5, exclusively in the direction of said abutment member 4. Thus, when the device is installed, the parts 2, 3 to be joined can be tightened between the abutment member 4 and the plate member 6.

To install the device 1, matching holes 7, 8 should necessarily and preventively be made into the parts to be joined, in correspondence of a joining point.

The holes 7, 8 are for transit of the tie member 5, which has an elongated shape. It is therefore understood that the diameter of the holes made should be such as to allow transit of the tie member 5. Of course, the diameter of the holes should also be such as not to allow instead transit of the abutment member 4 and the plate member 6.

Next Figures 2A and 2B illustrate in greater detail the modes for the unidirectional sliding of the plate member 6 along the tie member 5.

The tie member 5 comprises first means 9 for the unidirectional sliding of said plate member 6.

In particular, said first unidirectional sliding means comprises a first knurled contour 9, preferably defined by a plurality of frustoconical sections 9' in sequence, overall making up the tie member 5.

In order to slide along the tie member 5, the plate member 6 has a through hole for sliding, suitable for transit of the tie member 5.

Advantageously, the plate member 6 comprises second unidirectional sliding means, preferably comprising a second knurled contour 6'.

In order to be able to advantageously cooperate with the tie member 5, the second knurled contour is obtained from a specific shape of the through hole for sliding, defined by one or more frustoconical seats 6" in sequence.

To be able to effectively cooperate therebetween, the frustoconical sections and the frustoconical seats have substantially the same dimensions, so as to cooperate for causing an exclusively unidirectional sliding.

In fact, according to the present invention, the tie member 5 is made of a material having an elasticity such as to deform itself sufficiently to allow transit of the tie member 5 into the through hole for sliding of the plate member 6, when it is subjected to traction, as denoted by arrow F1 of Figure 2A, resulting in the cooperation between said frustoconical sections and said frustoconical seats.

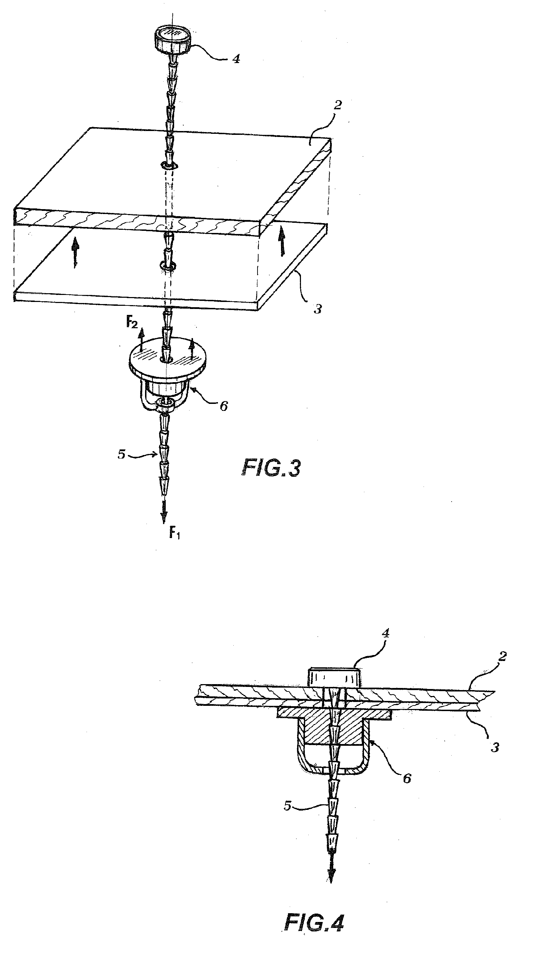

Next Figures 3 and 4 illustrate the positioning of the device with respect to the parts to be joined and its operation to be installed.

A traction on the tie member 5, together with a reactive force F2 on the plate member 6, causes a sliding thereof, by discrete steps, along the tie member itself. Each step will of course be equal to the longitudinal dimension of one of the frustoconical sections.

At each step, each one of the frustoconical sections of which the tie member 5 is comprised abuts into a matching and equal-sized frustoconical seat of the plate member 6. Accordingly, the abutment created at the level of each of the major bases of the frustoconical sections prevents the plate member from being slidable in a reverse direction along the tie member.

Once tightening has ended, the two (or more) parts to be joined will be found tightened between the abutment member 4 and the plate member 6, as illustrated in Figure 4.

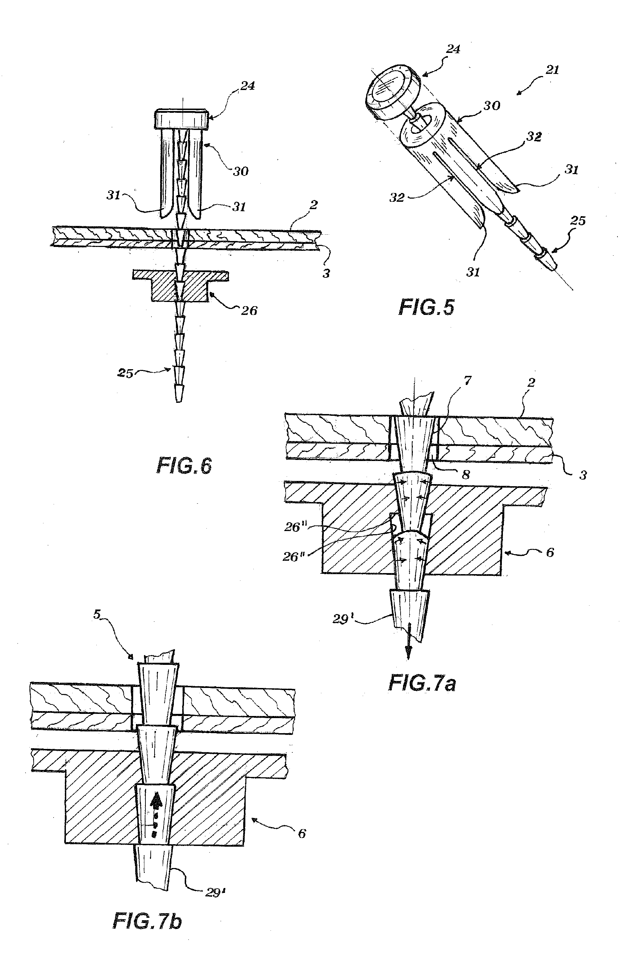

Next Figures 5 to 9 refer to a second embodiment of the present invention.

In particular, a device 21 according to said further embodiment comprises, besides the features already described in connection with the first embodiment, a laminar body 30, of substantially tubular shape.

Such hollow laminar body 30 can be axially arranged along the tie member 25, as illustrated in Figure 5. Preferably, as shown in Figure 6, the laminar body 30 is placed between the abutment member 24 and one of said parts to be joined.

As to the operation modes and the cooperation between the tie member 25 and the plate member 26 of the device 21, what has been described hereto holds true.

In this case as well, the tie member 25 comprises first means for unidirectional sliding, preferably made in the form of a sequence of frustoconical sections.

In parallel, the plate member 26 has a through hole for sliding, whose shape is defined by a sequence of frustoconical seats, of dimensions substantially equal to those of the frustoconical sections of the tie member 25.

This brings about the possibility of an exclusively unidirectional sliding, in the direction of the abutment member 24 of the plate member 26.

It is not necessary for us to delve into this aspect further, since the mechanism has already been described in detail.

The laminar body 30 has first preferential tearing lines 32, parallel to a longitudinal axis thereof, which extend for at least a portion of its length.

These lines 32 therefore define tongues 31 that, as will be described hereinafter, carry out a specific function in the tightening, contributing to the stability of the same.

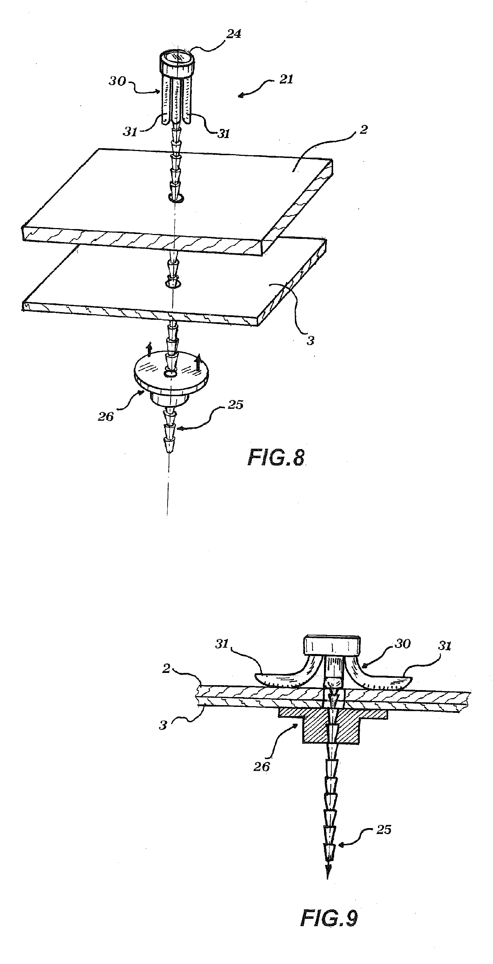

As mentioned hereto, and as clearly illustrated in Figure 8, in use of the device the laminar body 30 is positioned between the abutment member 24 and one of the parts to be joined. Advantageously, the laminar body 30 could be directly fixed to the abutment member 24.

The position of the body 30 is such that the preferential tearing lines 32 extend to the end lying on the joining side, opposite to the abutment member 24.

Thus, with the sliding of the plate member 26 along the tie member 25, the laminar body 30 is compressed between the abutment member 24 and one of the parts to be joined, until yielding of the preferential tearing lines 32.

Advantageously, the tongues 31 are shaped so as to facilitate their radial opening out, about the tie member 25, as shown in Figure 9.

Thus, the laminar body 30 with the tongues 31 radially opened out is further compressed, forming somehow a further partially flexible opposing member which contributes to make the tightening firmer, by overcoming e.g. difficulties due to a possible surface unevenness of the parts to be joined.

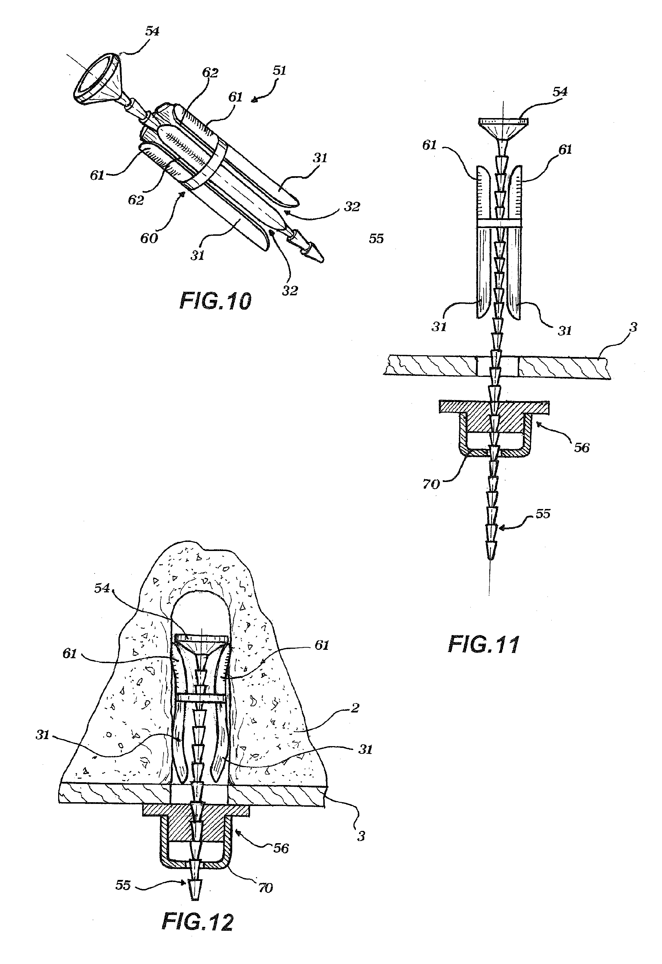

Next Figures 10, 11 and 12 refer to a third and preferred embodiment of a device 51 according to the present invention.

In particular, according to such third embodiment, the device 51 comprises a laminar body 60, at least partly similar to what has already be described in the foregoing.

In fact, the laminar body 60 has a plurality of preferential tearing lines 62, extending longitudinally from a first end thereof, so as to define first tongues 61. Such first tongues perform exactly the function already described in the foregoing with regard to the other embodiments.

Furthermore, the laminar body 60 has second preferential tearing lines 63, which extend longitudinally from its opposite end so as to define second tongues 64.

The laminar body 60 may therefore be arranged axially along the tie member 55, as illustrated in Figure 10.

Moreover, the device 51 comprises an abutment member 54 having a substantially frustoconical shape, with a vertex portion facing towards the tie member 55 to which it is integrally fixed.

As illustrated in Figure 11, this embodiment of the device proves particularly advantageous when at least one of the two parts to be joined is of a thickness such that it is not possible to overstep it. In these cases, it is not possible to make a through hole onto the parts to be joined, and therefore the hole for inserting the device will be a blind hole.

As for the rest, the other components and the operation of the device are as already described in the foregoing, therefore a detailed description thereof will be omitted.

Figure 11 shows the device 51 inserted into a blind hole made, e.g., into a part, for fixing thereon a further portion of material. It will be evident that, by exerting a tractive force on the tie member 55 and concomitantly holding the plate member 56, the laminar body 60 will tend to expand. In particular, the second tongues 64 will radially open out due to the action of the frustoconical surface of the abutment member 56, and the first tongues 61 will remain compressed and could only deform radially toward the outside, to force on the internal walls of the blind hole.

Thus, as illustrated in Figure 12, the device implements anyhow a remarkable grip inside the hole and can, as already mentioned in the foregoing, be installed without the aid of any tool.

In all of the embodiments described hereto, the plate member may further comprise a supporting portion 70, e.g. shaped like a hook or the like, useful for fixing items to the device after the latter has been installed. For instance, when the device is used on the ceiling, a chandelier can advantageously be coupled to the supporting member 70.

The present invention has been hereto described with reference to preferred embodiments thereof. It is understood that other embodiments might exist, all falling within the concept of the same invention, and all comprised within the protective scope of the claims hereinafter.

## Claims

1. A fixing device (1; 21; 51) for the joining of two or more parts (2, 3) to be joined, comprising:
- an abutment member (4; 24; 54);
- a tie member (5; 25; 55) having a first end fixed to said abutment member (4, 24; 54) and a second free end; and
- a plate member (6; 26; 56) apt to slide only unidirectionally along said tie member (5; 25; 55), in the direction of said abutment member (4; 24; 54),
the arrangement being such that said parts (2, 3) to be joined be tightened between said abutment member (4; 24; 54) and said plate member (6; 26; 56) when the device is installed.

2. The device according to claim 1, wherein said tie member (5; 25; 55) has an elongated shape, apt to be inserted into respective holes (7, 8) made into said parts (2; 3) to be joined, in correspondence of a joining point.

3. The device according to claim 1 or 2, wherein said tie member (5; 25; 55) comprises first means (9, 9'; 29, 29') for the unidirectional sliding of said plate member (6; 26).

4. The device according to claim 3, wherein said first unidirectional sliding means comprises a first knurled contour (9; 29).

5. The device according to claim 4, wherein said first knurled contour (9; 29) is defined by a plurality of frustoconical sections (9'; 29') in sequence, overall making up said tie member (5; 25; 55).

6. The device according to any one of the claims 1 to 5, wherein said plate member (6; 26; 56) comprises a through hole for sliding, suitable for transit of said tie member (5; 25; 55).

7. The device according to claim 6, wherein said plate member (6; 26; 56) comprises second means (6'; 6") for the unidirectional sliding of said plate member (6; 26; 56).

8. The device according to claim 7, wherein said second unidirectional sliding means (6', 6") comprises a second knurled contour (6').

9. The device according to claim 8, wherein said second knurled contour (6') is obtained from a shape of said hole for sliding, defined by one or more frustoconical seats (6") in sequence.

10. The device according to claims 5 and 9, wherein said frustoconical sections (9') and said frustoconical seats (6") have substantially the same dimensions, so as to cooperate for causing a unidirectional sliding.

11. The device according to any one of the claims 6 to 10, wherein said tie member (5; 25; 55) is made of a material having an elasticity such as to deform itself sufficiently to allow transit of the tie member (5; 25; 55) into said through hole, when subjected to traction, causing the cooperation between said frustoconical sections (9') and said frustoconical seats (6").

12. The device (21; 51) according to any one of the claims 1 to 11, further comprising a laminar body (30; 60), of substantially tubular shape, axially positionable along said tie member (25; 55), between said abutment member (24; 54) and one of said parts to be joined.

13. The device according to claim 12, wherein said laminar body (30; 60) has first preferential tearing lines (32) parallel to a longitudinal axis thereof, which extend for at least a portion of its length from a first end thereof.

14. The device according to claim 12 or 13, wherein said laminar body (60) has second preferential tearing lines (62) parallel to a longitudinal axis thereof, which extend for at least a portion of its length from a second end thereof and said abutment member (56) has a frustoconical shape with a vertex portion facing said tie member (55).

15. The device according to any one of the preceding claims, wherein said plate member (6; 26; 56) comprises a supporting member (70) preferably shaped like a hook or the like.
